# EUROPÄISCHE PATENTSCHRIFT

(11) **EP 2 301 396 B1**
(45) Veröffentlichungstag und Bekanntmachung des Hinweises auf die Patenterteilung: **12.12.2012**
(21) Anmeldenummer: 10009037.2
(22) Anmeldetag: 31.08.2010
(51) Int. Cl.: A47J 31/44

(54) **Kaffee/Espressomaschine mit einer Milchschaumerzeugungseinrichtung für Cappuccino**
Coffee/espresso machine with a milk foaming device for cappuccino
Machine à café/espresso dotée d'un dispositif de production de mousse de lait pour cappucino

(30) Priorität: 29.09.2009 DE 202009013064 U
(43) Veröffentlichungstag der Anmeldung: 30.03.2011
(73) Patentinhaber: Eugster/Frismag AG, 8580 Amriswil (CH)
(72) Erfinder: Mahlich, Gotthard, 61476 Kronberg (DE)
(74) Vertreter: Schubert, Siegmar

(56) Entgegenhaltungen:
- EP-A1- 2 186 454
- EP-B1- 0 480 928
- EP-B1- 0 820 715
- WO-A1-01/74211

## Beschreibung

Die Erfindung betrifft eine Kaffee-/Espressomaschine mit einer Milchschaumerzeugungseinrichtung für Cappuccino.

Zur Zubereitung von Cappuccino ist es wünschenswert, die Kaffee-/Espressomaschine so auszubilden, dass auf einer Aufstellfläche eine Tasse oder zwei Tassen als Auffanggefäß(e) zur Einleitung von Milchschaum und Espresso nicht umpositioniert zu werden brauchen. Dies vereinfacht und verkürzt den Cappuccinozubereitungsvorgang.

Zu diesem Zweck ist es bekannt, je ein Auslaufrohr für Milchschaum und für Espresso eng beieinander anzuordnen (EP-A-0 480 928). Zur Zubereitung von Espresso werden mit dieser Kaffee-/Espressomaschine bevorzugt Milchschaum und Espresso gleichzeitig in die Tasse abgegeben, um den Cappuccino schnell herzustellen. Es kann allerdings stattdessen auch die Kaffee-/Espressomaschine so eingestellt sein, dass nach persönlichem Belieben Milchschaum vor oder nach der Abgabe von Espresso abgegeben wird. - Jedoch erschwert bei dieser Kaffee-/Espressamaschine in jedem Fall die Ausbildung der konstruktiv völlig getrennten Ausläufe und deren Abstand das Positionieren der Tasse, so dass die Möglichkeit eines Fehlleitens einer der Cappuccinobestandteile und eine dadurch verursachte Verschmutzungsgefahr nicht ausgeschlossen werden können. Weiterhin ist die Reinigung der beiden getrennten Ausläufe umständlich. Wenn für jede der beiden Ausläufe je eine Spülleitung vorgesehen wird, ist der konstruktive Aufwand nicht unerheblich.

Um eine Kaffee-/Espressomaschine der eingangs genannten Gattung mit integrierter Milchschaumerzeugungseinrichtung möglichst konstruktiv zu vereinfachen und hinsichtlich ihrer Funktion, ihrer Bedienbarkeit und ihrer Reinigungsmöglichkeit zu verbessern, ist es bereits bekannt, den Kaffeeauslauf und einen Milchauslauf konstruktiv zu einer Auslasseinheit zusammenzufassen, in der der Kaffeeauslauf und der Milchauslauf koaxial zueinander angeordnet sind, so dass der Milchauslauf den Kaffeeauslauf umgibt (EP 0 820 715 B1). Insbesondere kann der Kaffeeauslauf unterhalb des Milchauslaufs ausmünden. Damit soll die Sauberhaltung der Maschine vereinfacht werden, da durch die tiefer gelegte Ausmündung des Kaffeeauslaufs verhindert wird, dass dieser durch die Milchreste verklebt. Jedoch kann in dem Milchauslauf zurückbleibende Milch in diesem verkleben, insbesondere wenn sich in dem Milchauslauf Stege bis zu einer Wand des Kaffeeauslaufs erstrecken, um als Leitschaufeln einen Drall der Milch und somit ein Verspritzen der Milch bzw. des Milchschaums zu verringern oder zu verhindern. In einer Kaffee-/Espressomaschine mit Doppelauslauf können zwei jeweils koaxiale Anordnungen des Kaffeeauslaufs und des Milchauslaufs zusammengefasst sein und über eine Verteilkammer mit einem Espressozulauf verbunden sein, wogegen die aufgeschäumte Milch den beiden koaxialen Anordnungen getrennt zugeführt wird.

Wenn die obige Kaffee-/Espressomaschine wie sonst bevorzugt so betrieben wird, dass zur Cappuccinozubereitung zuerst Kaffee/Espresso durch den Kaffeeauslauf ausläuft und anschließend Milchschaum durch den äußeren koaxialen Milchschaumauslauf, ist der Nachteil besonders groß, dass wenigstens ein Teil der in dem Milchschaumauslauf verbleibenden Milchreste bei dem anschließenden Kaffee-/Espressoauslassvorgang und dadurch Erhitzen des Kaffeeauslaufrohrs feeauslaufrohrs an dem Kaffeeauslaufrohr festbacken kann und bei einem Spülvorgang nur schwer zu entfernen ist.

Die nachveröffentlichte EP-A-2 186 454 beinhaltet einen Kaffeeautomaten zur Ausgabe von Kaffee, Milch und/oder Milchschaum mit mindestens einem Kaffeezuführkanal und einem Milch-/Milchschaumzuführkanal mit zwei zueinander beabstandet angeordneten Kanalauslässen. Der Abstand zwischen den beiden Kanalauslässen ist so gewählt, dass zwei Getränkebehälter gemeinsam befüllt werden können oder lediglich ein einziger Getränkebehälter befüllt werden kann. Von zwei vorgesehenen Kaffeezuführkanälen ist je einer einem der beiden Kanalauslässe zugeordnet. Eine Kanalgabel mit zwei Teilkanälen verbindet den Milch-/ Milchschaumzuführkanal flüssigkeitsleitend mit den beiden Kanalauslässen. Die Kanalgabel ist insbesondere zur Reinigung abnehmbar ausgebildet

Der vorliegenden Erfindung liegt die Aufgabe zugrunde, die Mittel in einer Kaffee-/Espressomaschine zur Einleitung von Milchschaum und Espresso in ein Auffanggefäß noch bedienungsfreundlicher und sicherer zu gestalten und deren Reinigung insbesondere nach einer Cappuccinozubereitung, bei der zuerst der Milchschaumauslass erfolgt und darauffolgend der Kaffee-/ Espressoauslauf, zu erleichtern. Jedenfalls soll zur Cappuccinozubereitung eine weniger genaue Positionierung einer Tasse oder eines Auffanggefäßes ausreichen, um Espresso und Milchschaum der Tasse bzw. dem Auffanggefäß ohne seitliches Fehlleiten zuzuführen.

Diese Aufgabe wird für eine Kaffee-/Espressomaschine mit den in Anspruch 1 angegebenen Merkmalen gelöst.

Die Ausbildung der Mittel, mit denen einem Auffanggefäß, insbesondere einer Tasse, die Bestandteile eines Cappuccino, nämlich Espresso und Milchschaum, zugeführt werden, ist dadurch wesentlich vereinfacht, dass je eine Milchschaumleitung in ein oberes Ende je eines gemeinsamen Auslaufrohrs mündet, dessen lichter Querschnitt somit nicht durch einen zentralen Espressoauslauf verengt ist. In der erfindungsgemäßen Kaffee-/Espressomaschine steht vielmehr der vollständige lichte Querschnitt des gemeinsamen Auslaufrohrs jeweils für Milchschaumauslauf und Espressoauslauf zur Verfügung.

Der lichte Querschnitt in dem gemeinsamen Auslaufrohr kann nur in einem unteren Endabschnitt durch einen gemäß Anspruch 4 zentrisch hineinragenden Zentrierstab eingeschränkt werden, um den Abfluss des Milchschaums in das Auffanggefäß unter der durch das gemeinsame Auslaufrohr gebildeten Auslaufstrecke zu beruhigen und zu zentrieren.

Die erfindungsgemäße Kaffee-/Espres-somaschine weist zur Zubereitung von Espresso in zwei Tassen bzw. Auffanggefäß einen Auslaufverteiler mit zwei Auslaufrohren auf, wobei der Auslaufverteiler mit dem Espressozulauf flüssigkeitsleitend verbunden ist. Von zwei Milchschaumleitungen, die voneinander getrennt an mindestens eine Milchschaumerzeugungseinrichtung angeschlossen sind, mündet jeweils eine in je ein oberes Ende eines der beiden Auslaufrohre.

Der Auslaufverteiler ist konstruktiv einfach, aber zur Auslaufverteilung des Espresso wirksam mit den Merkmalen ausgebildet, dass von den Enden eines Espressoverteilerrohrs des Auslaufverteilers jeweils ein Auslaufrohr nach unten abgewinkelt angeordnet ist und unten offen ist und dass je eine der zwei Milchschaumleitungen in jeweils ein oberes Ende eines der Auslaufrohre mündet. Das Espressoverteilerrohr ist zur Verteilerwirkung im Wesentlichen waagerecht angeordnet und kann allenfalls von dem mittigen Espressozulauf gegenüber der Horizontalen, um einen spitzen Winkel geneigt nach unten zu den oberen Enden der Auslaufrohre verlaufen.

Die erfindungsgemäße Anordnung der Milchschaumleitungen, von denen je eine in jeweils ein oberes Ende eines der Auslaufrohre mündet, welche dort auch mit dem Espressozulauf in flüssigkeitsleitender Verbindung steht, ist besonders vorteilhaft in Verbindung mit einer Steuerung der Abfolge der Aktivierung der Espressobrüheinheit und der Milchschaumerzeugungseinrichtung nach Anspruch 2, so dass selbsttätig zunächst die Milchschaumerzeugungseinrichtung aktiviert wird und anschließend die Espressobrüheinheit. Somit fließt zur Cappuccinobereitung zunächst Milchschaum und anschließend Espresso durch jeweils eines der Auslaufrohre, so dass durch den auf den Milchschaumauslauf folgenden Espressoauslauf die in dem gemeinsamen Auslaufrohr zunächst verbliebenen Milchschaumreste ohne Weiteres bereits weitgehend ausgespült werden. Bei einem darauf folgenden Spülvorgang mit Wasser brauchen praktisch nur noch die verbliebenen Espressoreste aus dem gemeinsamen Auslaufrohr gespült zu werden. Das zum Spülen des gemeinsamen Auslaufrohrs verwendete Wasser kann dem gemeinsamen Auslaufrohr über eine einzige Spülleitung zugeführt werden, die nach Anspruch 3 in das obere Ende des Auslaufrohrs mündet.

Eine einfache Ausführungsform der Milchschaumerzeugungseinrichtung für Cappuccino einer Kaffee-/Espressomaschine mit einem Auslaufverteiler wird im Folgenden anhand einer Zeichnung mit zwei Figuren beschrieben, aus der sich weitere vorteilhafte Merkmale der Erfindung ergeben können. Es zeigen:
- Fig. 1: einen Längsschnitt durch die Milchshaumerzeugungseinrichtung mit Auslaufverteiler in schematischer Darstellung und
- Fig. 2: einen Querschnitt durch den Auslaufverteiler in der Schnittebene A-A in Figur 1.

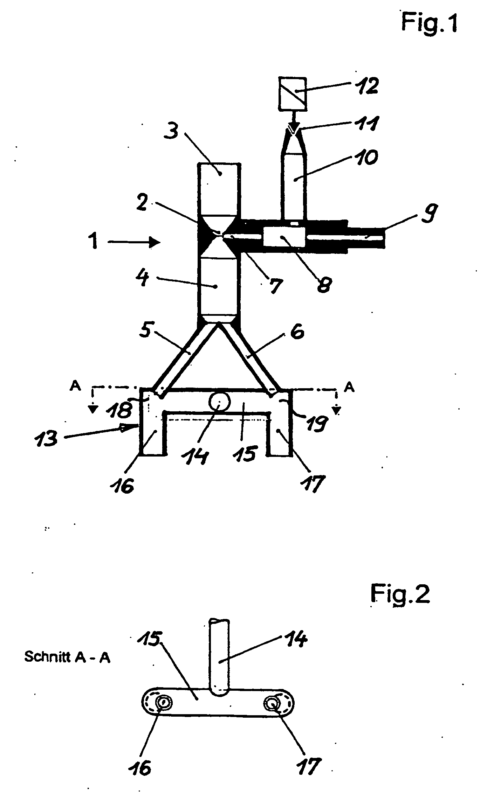

In Figur 1 ist mit 1 eine Milchschaumerzeugungseinrichtung mit einer Venturidüse 2 bezeichnet. Die Venturidüse 2 ist in dem Strömungskanal zwischen einer Dampfzuleitung 3 und einer Schäumkammer 4 angeordnet, aus deren Boden zwei Milchschaumleitungen 5 und 6 herausführen. Zu der Venturidüse 4 führt eine Milchluftgemischleitung 7, die mit einer Milchluftvormischkammer 8 verbunden ist. Die Milchluftvormlschkammer 8 steht einerseits mit einer Milchzutaufleitung 9 sowie andererseits über eine nicht bezeichnete Öffnung mit einer Luftleitung 10 in Verbindung, die durch ein Luftventil 11 mittels eines Luftventilantriebs 12 verschlossen werden kann, um im Bedarfsfall der Venturidüse 2 kein Milchluftvorgemisch, sondern nur Milch zuzuführen.

Ein Auslaufverteiler, der allgemein mit 13 bezeichnet ist, steht einerseits über die Milchschaumleitungen 5 und 6 mit der Schäumkammer in Verbindung und andererseits über einen Espressozulauf 14 mit einer nicht dargestellten Espressobrüheinheit.

Der Espressozulauf 14 ist mittig in einem horizontalen Espressoverteilerrohr 15 angeordnet, an dessen beiden Enden je ein Auslaufrohr 16 bzw. 17 vertikal nach unten abgewinkelt angeordnet ist, das über einer nicht dargestellten gemeinsamen Abstellfläche für Tassen und dergleichen Auffanggefäße unten offen ist. Die Milchschaumleitungen 5, 6 münden jeweils in ein oberes Ende 18 bzw. 19 des Auslaufrohrs 16 bzw. 17, welches somit jeweils ein gemeinsames Auslaufrohr 16 bzw. 17 nacheinander für Milchschaum, welcher aus der Milchschaumleitung 5 bzw. 6 strömt, und Espresso ist, der sich in dem Espressoverteilerrohr 15 verteilt.

In die nicht bezeichneten unten offenen Endabschnitte der Auslaufrohre 16, 17 reichen bei dieser Ausführungsform Zentrierstäbe 20, 21 konzentrisch hinein, die an nicht bezeichneten radialen Stegen in diesen Endabschnitten gehalten sind.

Die Funktion der Milchschaumerzeugungseinrichtung besteht im Wesentlichen darin, dass durch Dampf, der in die Dampfzuleitung 3 einströmt, in die Venturidüse 2 Milchluftgemisch oder aber bei geschlossenem Luftventil 11 Milch angesaugt wird und in der Schäumkammer zu Milchschaum bzw. erhitzter Milch aufbereitet wird. Der Milchschaum bzw. die erhitzte Milch strömt dann, wie oben erwähnt, durch die Milchschaumleitungen 5, 6 in gleichen Teilen in die Auslaufrohre 16, 17, vorzugsweise bevor dem Verteilerrohr 15 Espresso über den Espressozulauf 14 zugeführt wird und in die Auslaufrohre 16, 17 verteilt wird.

### Bezugszeichenliste

- 1: Milchschaumerzeugungseinrichtung
- 2: Venturidüse
- 3: Dampfzuleitung
- 4: Schäumkammer
- 5: Milchschaumleitung
- 6: Milchschaumleitung
- 7: Milchluftgemischleitung
- 8: Milchluftvormischkammer
- 9: Milchzulaufleitung
- 10: Luftleitung
- 11: Luftventil
- 12: Luftventilantrieb
- 13: Auslaufverteiler
- 14: Espressozulauf
- 15: Espressoverteilerrohr
- 16: Auslaufrohr
- 17: Auslaufrohr
- 18: oberes Ende
- 19: oberes Ende
- 20: Zentrierstab
- 21: Zentrierstab

## Patentansprüche

1. Kaffee-/Espressomaschine mit einer Milchschaumerzeugungseinrichtung (1) für Cappuccino sowie mit zwei Auslaufrohren (16, 17), die mit einem Espressozulauf (14) in flüssigkeitsleitender Verbindung stehen, wobei der Espressozulauf (14) an einem Ausgang einer Espressobrüheinheit angeschlossen ist,
wobei an die Milchschaumerzeugungseinrichtung (1) zwei Milchschaumleitungen (5, 6) angeschlossen sind,
wobei ein Auslaufverteiler (13) die zwei Auslaufrohre (16, 17) aufweist und mit dem Espressozulauf (14) flüssigkeitsleitend verbunden ist, wobei von Enden eines Espressoverteilerrohrs (15) des Auslaufverteilers (13) jeweils ein Auslaufrohr (16, 17) nach unten abgewinkelt angeordnet ist und unten offen ist, und
wobei je eine der Milchschaumleitungen (5, 6) in jeweils ein oberes Ende (18, 19) eines der Auslaufrohre (16, 17) mündet.

2. Kaffee-/Espressomaschine nach Anspruch 1,
**dadurch gekennzeichnet,**
**dass** eine Steuerung einer selbsttätigen Abfolge der Aktivierung der Esprassobrüheinheit und der Milchschaumerzeugungseinrichtung (1) so ausgebildet ist, dass zunächst die Milchschaumerzeugungseinrichtung (1) und anschließend die Espressobrüheinheit aktivierbar ist.

3. Kaffee-/Espressomaschine nach einem der vorangehenden Ansprüche,
**dadurch gekennzeichnet,**
**dass** je eine Spülleitung in das obere Ende (18, 19) jeweils eines der Auslaufrohre (16, 17) mündet.

4. Kaffee-/Espressomaschine nach einem der vorangehenden Ansprüche,
**dadurch gekennzeichnet,**
**dass** in jeweils einen unteren Endabschnitt eines der Auslaufrohre (16, 17) ein Zentrierstab (20, 21) zentrisch hineinragt.

## Claims

1. Coffee/espresso machine with a milk foaming device (1) for cappuccino and with two outflow tubes (16, 17) fluid-conductively connected with an espresso inflow (14)
wherein the espresso inflow (14) is connected to an outlet of an espresso brewing unit,
wherein two milk foam ducts (5, 6) are connected to the milk foam generating device (1),
wherein an outflow distributor (13) includes the said two outflow tubes (16, 17) and is fluid-conductively connected with the espresso inflow (14),
wherein from the ends of an espresso distributor tube (15) of the outflow distributor (13) one outflow tube (16, 17) each is provided downwardly bent and is open at the bottom end, and
wherein one of the milk foam ducts (5, 6) each opens into one upper end (18, 19) each of one of the outflow tubes (16, 17).

2. Coffee/espresso machine according to claim 1,
**characterized in**
**that** a control of the automatic sequence of the activation of the espresso brewing unit and of the milk foaming unit (1) is provided so that, first, the milk foaming unit (1) and, subsequently, the espresso brewing unit is activated.

3. Coffee/espresso machine according to one of the foregoing claims,
**characterized in**
**that** one rinsing duct each opens into the upper end (18, 19) of one of the outflow tubes (16, 17) each.

4. Coffee/espresso machine according to one of the foregoing claims,
**characterized in**
**that** a centering pin (20, 21) extends centrically into one bottom end section each of one of the outflow tubes (18, 17).

## Revendications

1. Machine à café/espresso comprenant un dispositif de production de mousse de lait (1) pour cappuccino, ainsi que deux tubes de sortie (16, 17) qui sont en liaison avec une arrivée d'espresso (14) d'une façon qui conduit le liquide, l'arrivée d'espresso (14) étant raccordée à une sortie d'une unité d'ébouillantage d'espresso,
dans laquelle deux conduites de mousse de lait (5, 6) sont raccordées au dispositif de production de mousse de lait (1),
dans laquelle un distributeur de sortie (13) présente les deux tubes de sortie (16, 17) et est relié à l'arrivée d'espresso (14) d'une façon qui conduit le liquide,
dans laquelle, de chacune des extrémités d'un tube de distributeur d'espresso (15) du distributeur de sortie (13), part un tube de sortie (16,17) coudé vers le bas et ouvert en bas, et
dans laquelle, dans une extrémité supérieure (18, 19) de chacun des tubes de sortie (16, 17), débouche l'une des conduites de mousse de lait (5, 6).

2. Machine à café espresso selon la revendication 1,
**caractérisée**
**en ce qu'**une commande d'une suite automatique de l'activation de l'unité d'ébouillantage d'espresso et du dispositif de production de mousse de lait (1) est constituée de telle sorte que le dispositif de production de mousse de lait (1) est activé en premier lieu et que l'unité d'ébouillantage d'espresso peut être activée ensuite.

3. Machine à café espresso selon l'une des revendications précédentes,
**caractérisée**
**en ce que**, dans l'extrémité supérieure (18, 19) de chacun des tubes de sortie (16, 17), débouche une conduite de rinçage.

4. Machine à café espresso selon l'une des revendications précédentes,
**caractérisée**
**en ce que**, dans le segment terminal inférieur de chacun des tubes de sortie (16, 17), s'engage une tige de centrage (20, 21) en position centrée.
